Europäisches Patentamt

European Patent Office

Office européen des brevets

(11) Veröffentlichungsnummer: **0 212 230**
A2

(12) # EUROPÄISCHE PATENTANMELDUNG

(21) Anmeldenummer: **86109570.1**

(51) Int. Cl.⁴: **C 04 B 38/06**, B 01 D 39/20

(22) Anmeldetag: **12.07.86**

(30) Priorität: **14.08.85 DE 3529075**

(43) Veröffentlichungstag der Anmeldung: **04.03.87**
**Patentblatt 87/10**

(84) Benannte Vertragsstaaten: **AT CH DE FR GB IT LI NL SE**

(71) Anmelder: **M A N Technologie GmbH, Dachauer Strasse 667, D-8000 München 50 (DE)**

(72) Erfinder: **Erben, Edwin, Elninger Strase 10e, D-8000 München 50 (DE)**
Erfinder: **Schmiedeck, Walter, Erich-Kästner-Strasse 10, D-8000 München 40 (DE)**

(54) Verfahren zur Herstellung von porösen Gegenständen.

(57) Bei der Herstellung von porösen Gegenständen hoher Temperaturbeständigkeit, insbesondere Filterelemente für Rußpartikel aus Dieselabgasen unter Verwendung von Schaumstoffkörpern als Stützkörper für das Rohrmaterial des zu bildenden Gegenstandes wird vorgeschlagen, den Schaumstoffstützkörper aus mehreren Teilen zusammenzusetzen. Die Schaumteile (20, 21) werden mit der Masse zur Herstellung des Gegenstandes getränkt und anschließend zusammengesetzt und in diesem Zustand in den Trocknungsvorgang gebracht.

M.A.N. MASCHINENFABRIK AUGSBURG-NÜRNBERG
Aktiengesellschaft

gü/bl

München, den 13.08.1985

## Verfahren zur Herstellung von porösen Gegenständen

Die Erfindung bezieht sich auf ein Verfahren zur Herstellung von porösen Gegenständen aus hoch temperaturbeständigem Material, insbesondere zur Filterung von Partikeln aus Abgasen, bei dem ein Stützstoff mit dem für den Gegenstand vorgesehenen, pulverförmigen Material versetzt und wärmebehandelt wird, wobei der Stützstoff herausgebrannt wird.

Ein Verfahren dieser Art ist aus der EP 0050340 zur Herstellung von Ruß- bzw. Partikelfilter für Dieselabgase bekannt. Bei diesem Verfahren wird ein als Stützstoff dienender elastischer Polyurethanschaumkörper mit einem Keramikschlicker getränkt. Die an die Porenwandungen des Schaumkörpers abgesetzte Masse wird anschließend getrocknet und gebrannt. Dabei wird die Polyurethanschaummasse herausgebrannt. Das Endprodukt bzw. die Reproduzierbarkeit des Endproduktes hängt stark von der Behandlung des Schaumstoffes im Tränkvorgang ab. Bei voluminösen Gegenständen ist es durchaus möglich, daß die Keramikmasse nicht ausreichend in das Innere des Schaumstützkörpers eindringt, so daß eine inhomogene Porenstruktur des hergestellten Gegenstandes die Folge ist.

7.2317

Der Erfindung liegt die Aufgabe zugrunde, das Verfahren dahingehend zu verbessern, daß reproduzierbar homogene poröse Gegenstände herstellbar sind.

Die Aufgabe wird gemäß einer Ausführungsform der Erfindung mit den in Anspruch 1 gekennzeichneten Maßnahmen gelöst.

Hierbei ist es möglich, durch die Verwendung von zum Beispiel Schaumteilen gleichen Querschnitts, eine gleichmäßige Tränkung und Ablagerung des Materials für den porösen Gegenstand über den gesamten Querschnitt zu erhalten. Durch Zusammensetzen der entsprechend geformten Schaumteile kann jede Außenkontur, die nachher durch den porösen Gegenstand übernommen wird, hergestellt werden.

Für ein Rohr kann beispielsweise eine Schaummatte oder eine Textilfolie (Cellulose) verwendet werden, die nach dem Tränken auf einen Dorn aufgewickelt wird.

Ein Zylinder oder ein Quader kann aus runden bzw. viereckigen Schaumscheiben zusammengesetzt werden. Auf diese Weise kann ein Stützkörper beliebiger Konfiguration zusammengesetzt werden, indem entweder entsprechend geformte Einzelstücke gebildet werden oder ein Stützkörper in seiner Endformgebung hergestellt und anschließend in Scheiben, Streifen oder Stücke getrennt wird.

Das erfindungsgemäße Verfahren hat den weiteren Vorteil, daß damit in einfacher Art Gegenstände mit örtlich unterschiedlich großen Poren herstellbar sind.

Das Verfahren ist insbesondere für die Herstellung von Keramikfilterkörpern zur Filterung von Partikeln aus Abgasen geeignet, indem das Verfahren eine problemlose Anpassung des herzustellenden Filters an den Raumbedarf, die Konfiguration, die Porösität, usw. ohne jegliche Schwierigkeiten ermöglicht. So kann beispielsweise eine geforderte Homogenität der Porengröße durch das gesamte Filterelement reproduzierbar erfüllt werden.

Die Aufgabe wird gemäß einer weiteren Ausführungsform der Erfindung mit den im Anspruch 4 gekennzeichneten Maßnahmen gelöst.

Hierbei werden die Poren des herzustellenden Gegenstandes durch die Polymerteilchen, die bei der Wärmebehandlung herausgebracht werden, gebildet. Dieses für geometrisch einfache Formen geeignete Verfahren, hat den Vorteil, daß der Formling in fertigungstechnisch einfacher Art einstückig gebildet wird, indem die Polymerteilchen lediglich in eine Negativform eingefüllt werden, die die Kontur des herzustellenden Gegenstands hat.

Die Aufgabe ist ferner gemäß einer dritten Ausführungsform der Erfindung mit den im Anspruch 8 gekennzeichneten Maßnahmen gelöst.

Dieses Verfahren hat den Vorteil, daß durch eine Vermischung des Stützstoffes mit dem Material für den Gegenstand eine ausgezeichnete Homogenität des porösen Körpers erreichbar ist und daß durch Formen des Rohkörpers jede beliebige Formgebung bzw. Kontur verwirklicht werden kann.

Die beiden letztgenannten Verfahren haben den weiteren Vorteil, daß es mit ihnen problemlos ist, den porösen Körper mit Fasern oder Partikeln zu versetzen, indem

7.2317
13.08.1985

diese lediglich der Mischung aus Stützstoff und Keramik- oder anderem Werkstoff beigemischt werden. Fasern und Partikel dienen der Stabilisierung des porösen Endproduktes.

Die Erfindung wird an Hand von in der Zeichnung schematisch dargestellten Beispielen näher erläutert.

Figuren 1 und 2 zeigen je ein Ausführungsbeispiel zur Herstellung von porösen Körpern hoher Temperaturbeständigkeit.

Figur 3 zeigt einen Querschnitt des nach Figur 2 hergestellten Gegenstandes und

Figuren 4 und 5 je ein weiteres Ausführungsbeispiel.

Für die Herstellung von porösen Gegenständen aus spröden Materialien, wie z. B. Keramik oder anderen hochtemperaturbeständigen Materialien, wird ein Stützstoff verwendet, der bei niedrigen Temperaturen brennbar ist, z. B. organische Stoffe, Polymere wie Polyurethan.

Der Stützstoff wird mit feinpulverisiertem Material, mit dem der poröse Körper hergestellt werden soll, versetzt und weiterbehandelt.

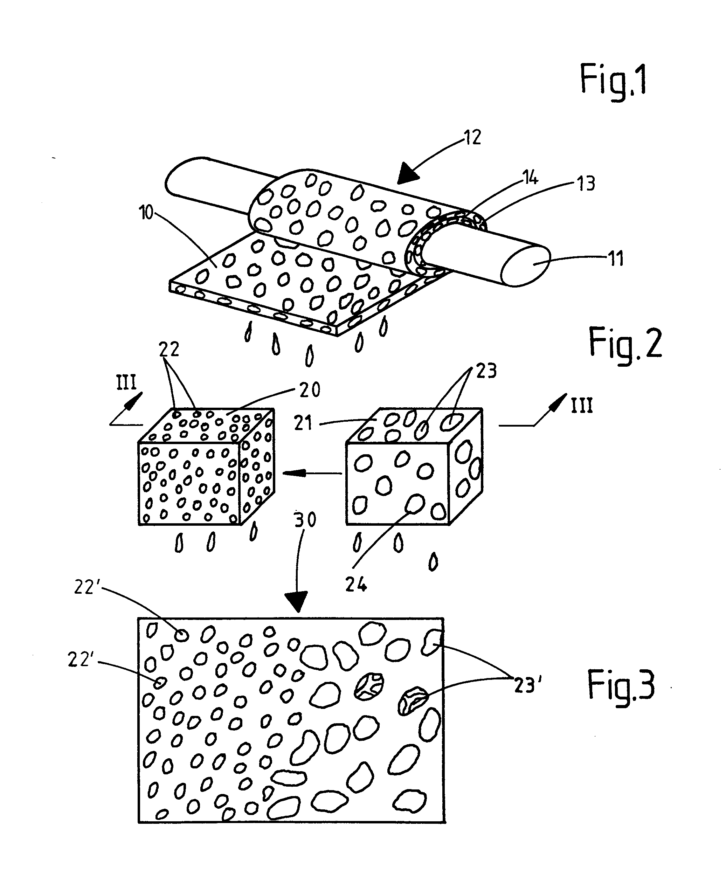

Figur 1 zeigt eine mit dem Material in Suspension getränkte, als Stützkörper dienende Schaummatte (10) die zur Herstellung eines porösen Rohres um einen Kern (11) gewickelt wird. Die feuchte Masse benachbarter Lagen des Wickelkörpers (12) fließen dabei ineinander, so daß eine Kontinuität der Masse innerhalb des Wickelkörpers (12) sichergestellt ist.

7.2317
13.08.1985

Nach dem Trocknen der Masse wird der Wickelkörper (12) zur Erhärtung des Massenmaterials gebrannt. Dabei wird das nichttemperaturbeständige Material des Stützkörpers (10) herausgebrannt, so daß ein Rohr (12) mit poröser Wandung aus dem temperaturbeständigen Material übrig bleibt.

Anstelle einer Schaummatte kann auch ein Textilgewebe verwendet werden. Will man einen Körper unterschiedlicher Porösität herstellen, so wird gemäß Figur 2 der Stützkörper aus entsprechenden Schaumteilen (20, 21) zusammengesetzt, die Poren (22 bzw. 23) unterschiedlicher Größe haben. Die Schaumteile (20, 21) werden getrennt in die Masse eingetaucht und in noch nassem Zustand der Masse in Pfeilrichtung, einen größeren Quader bildend in Verbindung gebracht und zum Trocknen bzw. Brennen bereitgestellt.

Das Endprodukt ergibt einen porösen Quader, dessen Querschnitt in Figur 3 gezeigt ist. Der Körper (30) weist in der einen Hälfte Poren (22) - kleineren und in der anderen Hälfte Poren (23) - größeren Durchmessers auf. Diese Porengröße entsprechen im Verhältnis den Poren (22 bzw. 23) der Stützstoffe (20 bzw. 21).

Die Aufteilung des Stützkörpers in mehrere Schaumteile (20, 21) hat auch die Wirkung, daß bei der Herstellung von sehr voluminösen porösen Körpern, die Gewähr geleistet ist, daß die Struktur auch des innersten Bereiches des Körpers der des äußeren Bereiches entspricht. Mit kleinen Stützkörpern lassen sich leichter reproduzierbare Ergebnisse erreichen. Es muß nämlich darauf geachtet werden, daß die Ablagerung der Masse auf den Porenwänden des Stützkörpers homogen und gleich gehalten

7.2317
13.08.1985

werden kann, um Gegenstände homogener und gleicher Porösität erhalten zu können. Dieses ist insbesondere bei der Verwendung von Zusatzpartikeln oder Fasern von Bedeutung.

In einem Beispiel zur Herstellung von Schaumkeramikfiltern wurde als keramischer Werkstoff 51 Gew. % $SiO_2$, 35 Gew. % $Al_2O_3$ und 14 Gew. % Mg O verwendet, das fein gemahlen mit Fasern aus $Al_2O_3$ (durchschnittlich 100 µm lang) vermischt wurde. Dieses Gemisch wurde mit einer wässrigen, 4%igen Lösung von Polyvenylalkohol in eine Suspension überführt.

Ein quaderförmiger Stützkörper (12x8x4 cm) aus Polyurethanschaum (durchschnittlicher Porendurchmesser etwa 300µm) wurde in dem Keramikpulver-Faser-Schlicker solange gedrückt und geknetet bis eine Menge des Schlickers, die dem Volumen des Stützkörpers gleich ist, im Stützkörper aufgenommen wurde. Der getränkte Stützkörper wurde dann bei 60°C gelagert und anschließend einige Stunden bei 110°C getrocknet.

In einem Ofen wurde der getrocknete Körper zunächst auf 200°C bis 250°C erhitzt, um den Schaumstoff zu zersetzen und dann auf 600°C bis 800°C gebracht, um die Pyrolysereste zu entfernen, das im Keramikmaterial gebundene Konstitutionswasser zu entfernen und einen Rohbrand des zurückbleibenden Schaum-Keramikkörpers durchzuführen. Der Grünling wurde schließlich bei etwa 1300°C gesintert.

Es hat sich gezeigt, daß der so hergestellte Filter eine Tiefenfilterwirkung hat, indem über die gesamten Porenwandungen, auch im Inneren des Filterkörpers abgelagerte Rußpartikel feststellbar waren.

7.2317
13.08.1985

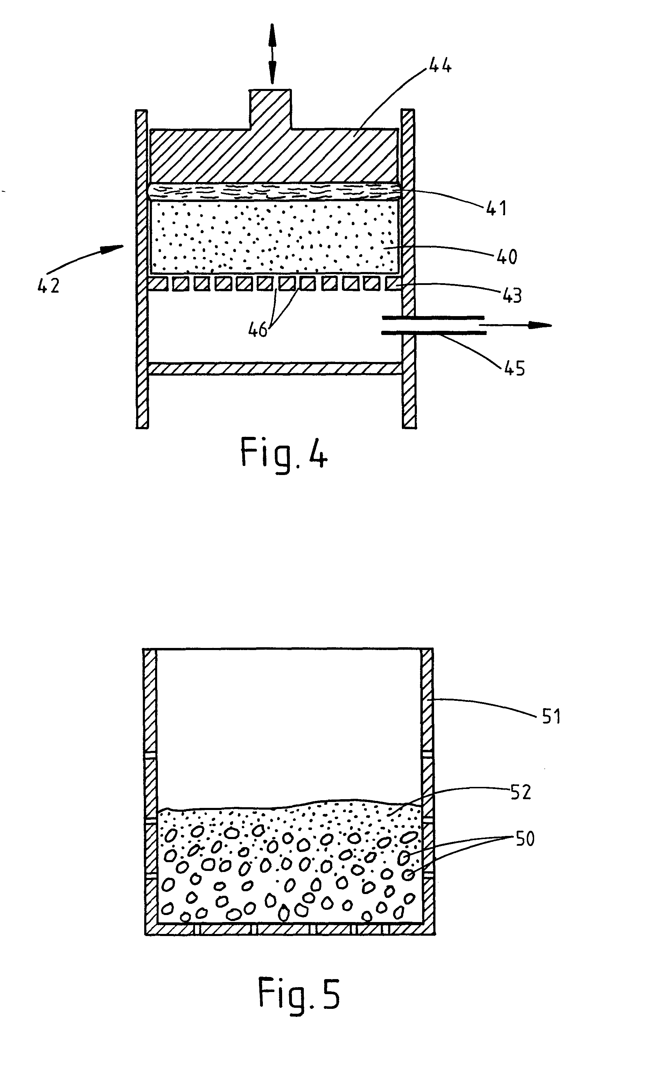

Das Tränken des Schaumstoffes (40) mit der Pulvermaterial-Suspension (41) kann in einer in Figur 4 dargestellten Vorrichtung (42) durch eine Kombination von Vakuum- und Druckinfiltration erfolgen. Der Schaum oder Schaumstoff (40) wird auf ein in der Vorrichtung (42) vorgesehenes Lochblech oder Siebblech (43) gelegt und mit der Suspension oder dem Schlicker (41) übergossen, auf dem ein Stempel (44) aufgesetzt wird. Durch mehrfaches Auf- und Abbewegen des Stempels (44) und einem zusätzlichen Sog einer am Rohrstutzen (45) angeschlossenen nicht dargestellten Wasserstrahlpumpe wird die Luft aus dem Schwamm (40) durch die Löcher (46) des Siebblechs (43) hindurch abgesaugt und der Schlicker (41) in den Schwamm (40) infiltriert.

Ein anderes Verfahren zur Herstellung von porösen Gegenständen (Figur 5) besteht in der Verwendung von Polymerteilchen (50), z. B. Polyäthylen, Melanin, Naphthalin als Stützstoff. Diese Teilchen werden in eine Form (51) gegeben, die die Negativform des herzustellenden Gegenstandes darstellt. Auf die Teilchen (50) wird die Suspension (52) aufgegossen, die in die Zwischenräume der Teilchen (50) infiltriert.

Die Infiltration kann durch absaugen der Luft oder Druckbeaufschlagung wie im Beispiel gemäß Figur 4 unterstützt bzw. beschleunigt werden.

Für die Herstellung von Schaum-Filterelementen für Abgase werden Teilchen (50) mit einem Durchmesser zwischen 100 und 1000 $\mu$m in die Form (51) mit einer Packungsdichte von 80 bis 95 % gefüllt. Sie werden anschließend mit Keramikschlicker (Mullit, Cordierit, Aluminiumtitanat) infiltriert, getrocknet und gebrannt, um die Polymerteilchen auszubrennen.

Schließlich verbleicht nach dem Sinterbrennen ein Schaumkeramikkörper mit bis zu 95 % offener Porösität.

Gemäß einem weiteren Verfahren wir Kaltpolymarisatpulver mit einem Härter und feinkörnigem Keramikpulver versetzt und in die gewünschte Form gebracht. Nach der Polymarisation wird das Polymarisat ausgebrannt und schließlich durch Sintern der erwünschte poröse Gegenstand erhalten.

Für die Herstellung von Filtern wird ein Polymarisat mit einer Korngröße zwischen 50 und 1000 µm verwendet und mit Keramikpulver im Verhältnis 80 - 95 zu 20 - 5 Polymarisat/ Keramikpulver versetzt.

7.2317
13.08.1985

M.A.N. MASCHINENFABRIK AUGSBURG-NÜRNBERG
Aktiengesellschaft
gü/bl


München, den 13.08.1985


P a t e n t a n s p r ü c h e

1. Verfahren zur Herstellung von porösen Gegenständen aus Material hoher Temperaturbeständigkeit, bei dem ein bei niedrigen Temperaturen brennbarer Stützstoff mit dem für den Gegenstand vorgesehenen, pulverförmigen Material versetzt und wärmebehandelt wird, wobei der Stützstoff herausgebrannt wird, dadurch gekennzeichnet, daß als Stützstoff Schaumstoffteile bzw. Polymerteilchen (10, 20, 21) verwendet werden, die mit einer das pulverförmige Material enthaltenden Suspension getränkt und noch im nassen bzw. feuchten Zustand zur endgültigen Formgebung des Gegenstandes (30) zusammengefügt bzw. -gesetzt und zum Trocknen gebracht werden und schließlich der Sinterung unterzogen werden.

2. Verfahren nach Anspruch 1 dadurch gekennzeichnet, daß als Schaumteil mindestens eine Schaummatte oder -Folie (10) verwendet wird, die nach dem Tränken mit der Masse auf einen Dorn (11) aufgewickelt wird.

3. Verfahren nach Anspruch 1 dadurch gekennzeichnet, daß die Schaumstoffteile geometrisch regelmäßige oder unregelmäßige Schaumstücke (20, 21) sind, die zusammen-

7.2317

gesetzt die Kontur des herzustellenden Gegenstandes haben.

4. Verfahren nach Anspruch 1, dadurch gekennzeichnet, daß als Stützstoff Polymerteilchen (50) mit einem Teilchendurchmesser von etwa dem gewünschten Porendurchmesser verwendet werden, daß die Teilchen in einer Form (51) angeordnet und mit einer das pulverförmige Material enthaltenden Suspension infiltriert anschließend getrocknet und wärmebehandelt werden.

5. Verfahren nach Anspruch 4, dadurch gekennzeichnet, daß die Polymerteilchen (50) in der Form (51) so angeordnet werden, daß sie eine Packungsdichte zwischen 80 - 95 % haben.

6. Verfahren nach Anspruch 1 oder 2, dadurch gekennzeichnet, daß die Polymerteilchen (50) aus Melanin, Polyäthylen, Hostalen oder Naphthalin bestehen.

7. Verfahren nach einem der Ansprüche 4 bis 6, dadurch gekennzeichnet, daß die Polymerteilchen (50) einen Durchmesser zwischen 100 und 1000 $\mu$m haben.

8. Verfahren nach Anspruch 1, dadurch gekennzeichnet, daß als Stützstoff Kaltpolymerisatpulver mit Korngröße entsprechend der gewünschten Porengröße verwendet wird, daß das Kaltpolymerisatpulver mit einem Härter und dem pulverförmigen Material für den herzustellenden Gegenstand versetzt und in die für den Gegenstand gewünschte Form gebracht wird und daß der so hergestellte Formling nach erfolgter Polymerisation gebrannt wird.

7.2317
13.08.1985

9.  Verfahren nach Anspruch 8, dadurch gekennzeichnet, daß die Korngröße des Kaltpolymerisatpulvers zwischen 50 und 1000 µm beträgt.

10. Verfahren nach Anspruch 8 oder 9, dadurch gekennzeichnet, daß das Verhältnis Kaltpolymerisat/ pulverförmiges Material 80 bis 95 zu 20 bis 5 beträgt.

11. Verfahren nach einem der vorhergehenden Ansprüche, gekennzeichnet durch deren Anwendung zur Herstellung von porösen Filterkörpern (30) zur Filterung von Partikeln aus Gasen, insbesondere Abgasen.

12. Verfahren nach Anspruch 11, dadurch gekennzeichnet, daß als Material für den Filter feinpulveriger keramischer Werkstoff, z. B. Aluminiumtitanat, $Al_2O_3$, Cordierit und Mullit bzw. Mischungen derselben verwendet wird.

13. Verfahren nach einem der vorhergehenden Ansprüche, dadurch gekennzeichnet, daß dem pulverförmigen Material Fasern und / oder Partikel aus temperaturbeständigem Material beigemischt werden.

Fig.1

Fig.2

Fig.3

Fig. 4

Fig. 5